# EUROPÄISCHE PATENTSCHRIFT

(11) **EP 1 084 333 B1**
(45) Veröffentlichungstag und Bekanntmachung des Hinweises auf die Patenterteilung: **24.04.2002**
(21) Anmeldenummer: 99927789.0
(22) Anmeldetag: 28.05.1999
(51) Int. Cl.: F01N 3/28

(54) **WABENKÖRPERANORDNUNG**
HONEYCOMB ARRANGEMENT
DISPOSITIF A CORPS ALVEOLAIRE

(30) Priorität: 05.06.1998 DE 19825230
(43) Veröffentlichungstag der Anmeldung: 21.03.2001
(73) Patentinhaber: Emitec Gesellschaft für Emissionstechnologie mbH, 53797 Lohmar (DE)
(72) Erfinder: HOLPP, Helmut, D-53721 Siegburg (DE); SIEPMANN, Uwe, D-51103 Köln (DE)
(74) Vertreter: Kahlhöfer, Hermann, Dipl.-Phys.
(86) Internationale Anmeldenummer: EP9903711
(87) Internationale Veröffentlichungsnummer: WO9964731

(56) Entgegenhaltungen:
- EP-A- 0 367 065
- WO-A-94/18441
- DE-A- 2 300 704
- DE-A- 3 926 072
- DE-A- 3 941 642

## Beschreibung

Die Erfindung betrifft eine Wabenkörperanordnung umfassend einen Wabenkörper mit einer Fluideintrittsseite und einer Fluidaustrittsseite, insbesondere Katalysator-Trägerkörper für Kraftfahrzeuge, aus zumindest teilweise strukturierten Blechlagen, die nach Ihrer Schichtung und/oder Wicklung für ein Fluid durchströmbare Kanäle bilden, wobei der Wabenkörper von einem inneren Mantelrohr und einem konzentrisch dazu angeordneten äußeren Mantelrohr umgeben ist und wobei das innere Mantelrohr zumindest in einem axialen Teilbereich als Wellschlauch ausgebildet ist.

Solche Wabenkörperanordnungen sind an sich bekannt. In der DE 2 300 704 sind z. B. keramische Wabenkörper beschrieben, die auf ihrer Oberfläche eine metallische Schicht aufweisen. Mit dieser Schicht sind elastische Elemente verbunden, die ihrerseits wiederum in dem äußeren Mantelrohr gelagert sind. Als elastische Haltelemente sind insbesondere Wellrohrabschnitte angeordnet, welche die thermisch bedingten Relativbewegungen zwischen dem Wabenkörper und dem äußeren Mantelrohr aufnehmen sollen. Die elastischen Elemente sind entweder zweiteilig, jeweils an der Fluidseintritts- und Fluidaustrittsseite, oder einteilig, über die Gesamtlänge des Wabenkörpers, angeordnet und weisen jeweils einen Flansch zum Anschluß an eine Rohrleitung auf.

Auch für metallische, aus Blechlagen aufgebaute Wabenkörper, ist beispielsweise aus der DE 39 41 642 A1 zur Verhinderung von Spannungen aufgrund von thermischen Dehnungen bekannt, Blechlagen mit einem auBeren Mantelrohr aus Metall zu umgeben, welches kurze Wellen in geringem Abstand besitzt, so daß ein Wabenkörper mit einem solchen äußeren Mantelrohr expandieren und schrumpfen kann.

Bei Wabenkörperanardnungen mit einem inneren und einem äußeren Mantelrohr, die zumindest in Teilbereichen gegeneinander verschiebbar sein sollen, gibt es auch viele fertigungstechnische Probleme, weil insbesondere beim Löten oder Schweißen von Verbindungen jeweils sichergestellt werden muß, daß nicht unerwünschte zusätzliche Verbindungen zwischen den beiden Mantelrohren die gegenseitige Verschiebbarkeit behindern, siehe z.B. DE-A-2 300 704.

Der Erfindung liegt die Aufgabe zugrunde, eine reproduzierbar mit gleichbleibender Qualität herstellbare Wabenkörperanordnung anzugeben, die durch einen guten Ausgleich mechanischer und thermischer Belastungen eine dauerhafte und sichere Lagerung eines aus Blechlagen aufgebauten Wabenkörpers in einem metallischen Gehäuse auch unter besonderen Betriebsbelastungen gewährleistet. Eine zusätzliche Aufgabe ist darüber hinaus, ein gutes Kaltstartverhalten der katalytischen Abgasreinigungsvorrichtung zu errreichen.

Diese Aufgabe wird erfindungsgemäß durch eine Wabenkörperanordnung gemäß Anspruch 1 gelöst. Vorteilhafte Ausgestaltungen und Weiterbildungen sind in den abhängigen Ansprüchen beschrieben.

Indem das innere Mantelrohr des Wabenkörpers neben einem als Wellschlauch mit schlauchwellungen ausgebildeten axialen Teilbereich mindestens einen weiteren axialen Teilbereich aufweist, welcher glatt am Wabenkörper anliegt, und indem mehrere nebeneinander angeordnete Schlauwellungen des gewellten Teilbereichs und das äußere Mantelrohr axial-partiell fügetechnisch miteinander verbunden sind, und indem der glatte Teilbereich und der Wabenkörper zumindest axial-partiell fügetechnisch miteinander verbunden sind, können in vorteilhafter Weise mechanische und thermische Belastungen gleichermaßen gut ausgeglichen sowie eine dauerhafte und sichere Lagerung des Wabenkörpers im Gehäuse gewährleistet werden. ErfindungsgemäB ist jeder für eine fügetechnische Verbindung mit dem äußeren Mantelrohr vorgesehene gewellte Teilbereich in seiner partiellen Länge so bemessen, daß bekannte Verbindungsmethoden, insbesondere Lötund/oder SchweiBverfahren, leicht anwendbar sind.

Erfindungsgemäß bevorzugt zeichnet sich die Wabenkörperanordnung dadurch aus, daß an der Fluideintrittsseite zuerst ein glatter Teilbereich angeordnet ist, dem mindestens ein gewellter Teilbereich und mindestens ein weiterer glatter Teilbereich folgen, so daß insgesamt n gewellte Teilbereiche und n+1 glatte Teilbereiche angeordnet sind, wobei n ganzzahlig und größer oder gleich 1 ist. Mit der fluideintrittsseitigen Anordnung eines als Luftspaltisolierung wirkenden, glatten Teilbereichs wird in vorteilhafter Weise ein schnelles Anspringen der katalytischen Reaktion bei Beginn der Beaufschlagung mit zu reinigendem Abgas gewährleistet. Alternativ zur Luftspaltisolierung kann die thermische Isolierung auch durch eine Isoliermatte, beispielsweise aus keramischen Werkstoff, welcher sehr geringe Wärmeleit- und Wärmekonvektionseigenschaften aufweist, verbessert werden.

In einer besonderen Ausführungsform ist bei n = 1 ist der eine gewellte Teilbereich überwiegend fluideintrittsseitig angeordnet. Dadurch ist der eintrittsseitige glatte Abschnitt des inneren Mantelrohres nur kurz, z.B. 5 bis 25 mm, und es werden insbesondere die fluideintrittsseitig, durch mitunter stark pulsierendes Abgas verursachten mechanischen Belastungen in vorteilhafter Weise aufgenommen.

Alternativ kann in einer anderen Ausführungsform für n = 1 der eine gewellte Teilbereich axial-zentral, also in axialer Richtung gesehen im wesentlichen in der Mitte des Wabenkörpers, angeordnet sein. Dies hat den Vorteil, daß bei der Montage nicht auf die Einbaurichtung geachtet werden muß.

Alternativ kann für n = 1 der eine gewellte Teilbereich auch überwiegend fluidaustrittsseitig angeordnet sein, insbesondere dann, wenn ein langer glatter erster Teilbereich zur Erzielung eines großen, vom äußeren Mantelrohr isolierten Volumens im Wabenkörper gewünscht wird.

Für n = 2 sind ist gewellter Teilbereich fluideintrittsseitig hinter einem glatten Teilbereich und ein anderer gewellter Teilbereich fluidaustrittsseitig vor einem glatten Teilbereich angeordnet. Eine solche, beidseitige, also fluideintrittsseitige und fluidaustrittsseitige Lagerung des Wabenkörpers im äußeren Mantelrohr, wirkt sich besonders vorteilhaft auf den Ausgleich mechanischer Belastungen aus und bewirkt eine sehr schwingungsunempfindliche Halterung des Wabenkörpers.

Für n = 3 sind der erste gewellte Teilbereich fluideintrittsseitig, der zweite gewellte Teilbereich axial-zentral und der dritte gewellte Teilbereich fluidaustrittsseitig angeordnet, jeweils im Wechsel mit glatten Teilbereichen. Eine solche Anordnung kombiniert die schon aufgezeigten Vorteile auch in extrem belasteten, beispielsweise motornah eingebauten Wabenkörperanordnungen. Für n größer 3 sind die gewellten und glatten Teilbereiche analog den bisherigen Ausführungen angeordnet.

Für eine haltbare Verbindung muß das innere Mantelrohr mindestens in einem Bereich mit dem Wabenkörper verbunden sein und in einem Bereich mit dem äußeren Mantelrohr. Bevorzugt werden alle glatten Teilbereiche zumindest partiell mit dem Wabenkörper verbunden, insbesondere hartgelötet. Außerdem werden bevorzugt alle gewellten Teilbereiche mit dem äußeren Mantelrohr verbunden, bevorzugt ebenfalls hartgelötet oder geschweißt. Dabei ist aber wichtig, nicht alle Wellenberge mit dem äußeren Mantelrohr zu verbinden, da ansonsten die Wirkung der Wellungen als Kompensator für Dehnungen behindert würde. Zumindest ein Teil der Wellenberge sollte ohne Verbindungen bleiben, insbesondere sollten nicht zwei auf beiden Seiten an einen glatten Teilbereich des inneren Mantelrohres angrenzende Wellenberge mit dem äuBeren Mantelrohr verbunden sein.

In einer bevorzugten Ausführungsform beträgt Summe der Axiallängen der gewellten Teilbereiche mehr als die Hälfte, vorzugsweise mehr als zwei Drittel, der Gesamtlänge des Wabenkörpers. Dadurch wird in vorteilhafter Weise insbesondere der Ausgleich mechanischer Belastungen erleichtert.

In einer besonderen Ausführungsform weisen die Schlauchwellungen der gewellten Teilbereiche über ihren Längsaxialschnitt betrachtet Flankenbereiche großer Steilheit, insbesondere sogar eine Omegaform, auf. Eine solche Ausgestaltung der Schlauchwellungen sichert je nach thermischer Belastung ein belastungsangepaßtes Expandieren und Schrumpfen des inneren Mantelrohres.

Vorzugsweise sind die Schlauchwellungen unabhängig von ihrer übrigen Form im Bereich ihrer fügetechnischen Verbindung mit dem äußeren Mantelrohr abgeflacht ausgebildet. Solche abgeflachten Bereiche ermöglichen eine flächige, hohe mechanische und thermische Belastungen aushaltende Verbindung.

Die partielle fügetechnische Verbindung zwischen einem gewellten Teilbereich und dem äußeren Mantelrohr erstreckt sich daher jeweils über 1 bis 5, vorzugsweise über 2 bis 4, insbesondere über 3, Wellenberge der Schlauchwellung des gewellten Teilbereichs, so daß die Verbindungen ihrer Verwendung gemäß dauerhaft und fertigungstechnisch sicher herstellbar sind.

ErfindungsgemäB bevorzugt beträgt das Verhältnis fügetechnisch verbundener Schlauchwellungen zu nicht fügetechnisch verbundenen Schlauchwellungen höchstens 1 : 1,5 , vorzugsweise 1 : 4, so daß ein Ausgleich insbesondere mechanischer Belastungen gewährleistet ist.

Der an der Fluideintrittsseite angeordnete erste glatte Teilbereich ist wenigstens 5 mm lang, vorzugsweise wenigstens 7,5 mm, insbesondere etwa 10 mm, die anderen glatten Teilbereiche sind wenigstens 15 mm lang, vorzugsweise wenigstens 20 mm, insbesondere etwa 25 mm.

Der Wabenkörper, welcher insbesondere ein axial-durchströmbarer Katalysator-Trägerkörper ist, kann eine beliebige geometrische, vorzugsweise eine zylindrische oder konische, Form aufweisen.

Zusätzliche Einzelheiten und weitere Vorteile werden nachfolgend anhand einiger bevorzugter Ausführungsbeispiele in Verbindung mit den beigefügten Zeichnungen beschrieben.

Darin zeigen:
- Fig. 1 bis 4: erfmdungsgemäß bevorzugte Ausführungsbeispiele einer Wabenkörperanordnung mit einem zylindrischen Wabenkörper teilweise im Längsaxialschnitt;
- Figur 5: ein weiteres Ausführungsbeispiel einer Wabenkörperanordnung mit einem konischen Wabenkörper teilweise im Längsaxialschnitt; und
- Fig. 6 und 7: vergrößerte Ausschnitte alternativer Schlauchwellungsformen eines gewellten Teilbereiches nach Fig. 1 bis 5.

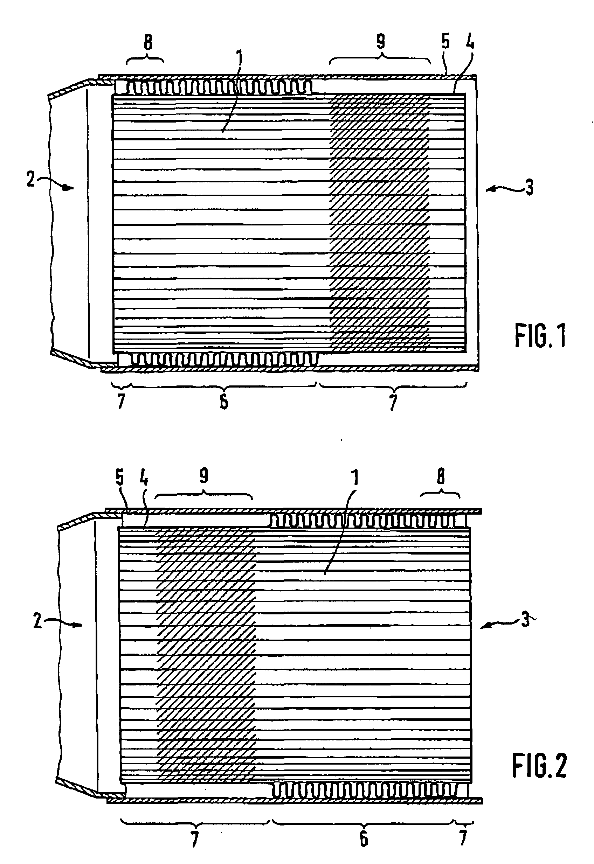

Fig. 1 zeigt teilweise im Längsaxialschnitt, ein erstes Ausführungsbeispiel einer Wabenkörperanordnung, umfassend einen zylindrischen oder ovalen Wabenkörper 1, insbesondere als Katalysator-Trägerkörper für Kraftfahrzeuge mit einer katalytisch aktiven Beschichtung ausgebildet, mit einer Fluideintrittsseite 2 und einer Fluidaustrittsseite 3, aufgebaut aus zumindest teilweise strukturierten Blechlagen, die nach ihrer Schichtung und/oder Wicklung für ein Fluid durchströmbare Kanäle bilden, wobei der Wabenkörper 1 von einem inneren Mantelrohr 4 und einem konzentrisch dazu angeordneten äußeren Mantelrohr 5 umgeben ist. An der Fluideintrittsseite 2 ist zuerst ein glatter Teilbereich 7 angeordnet, dem ein gewellter Teilbereich 6 und ein weiterer glatter Teilbereich 7 folgen. Der erste glatte Teilbereich 7 weist eine Länge von etwa 5 mm auf und ist damit deutlich kürzer als der nächste Teilbereich. Der überwiegend fluideintrittsseitig angeordnete gewellte Teilbereich 6 ist fluideintrittsseitig 2 axial-partiell 8 über eine Länge von z. B. drei Schlauchwellungen mit dem äußeren Mantelrohr 5 verlötet; der Wabenkörper 1 ist fluidaustrittsseitig 3 axial-partiell 9 über eine Länge von etwa 25 mm mit dem längerem zweiten glatten Teilbereich 7 verlötet. Eine solche Wabenkörperanordnung mit einem Wabenkörper 1 üblicher Baulänge von etwa 100 bis 150 mm gleicht aufgrund des überwiegend fluideintrittsseitig 2 angeordneten gewellten Teilbereichs 6 besonders gut mechanische Belastungen aus.

Fig. 2 zeigt, teilweise im Längsaxialschnitt, ein zweites Ausführungsbeispiel einer Wabenkörperanordnung mit einem zylindrischen oder ovalen Wabenkörper 1. An der Fluideintrittsseite 2 ist zuerst ein glatter Teilbereich 7 angeordnet, dem ein gewellter Teilbereich 6 und ein weiterer glatter Teilbereich 7 folgen. Der erste glatte Teilbereich 7 ist, im Gegensatz zu der Wabenkörperanordnung nach Fig. 1, deutlich länger als der zweite, der nur eine Länge von etwa 5 mm aufweist. Der überwiegend fluidaustrittsseitig 3 angeordnete gewellte Teilbereich 6 ist fluidaustrittsseitig axial-partiell 8 über eine Länge von 3 Schlauchwellungen mit dem äußeren Mantelrohr 5 verlötet; der Wabenkörper 1 ist fluideintrittsseitig 2 axial-partiell 9 über eine Länge von z. B. etwa 25 mm mit dem längeren ersten glatten Teilbereich 7 verlötet. Eine solche Wabenkörperanordnung mit einem Wabenkörper 1 üblicher Baulänge von etwa 100 bis 150 mm unterstützt aufgrund des fluideintrittsseitigen längeren ersten, thermisch vom äußeren Mantelrohr 5 isolierten, glatten Teilbereichs 7 besonders gut ein schnelles Ansprechen des Katalysator-Trägerkörpers beim Beaufschlagen mit Abgas eines Motors in der Kaltstartphase.

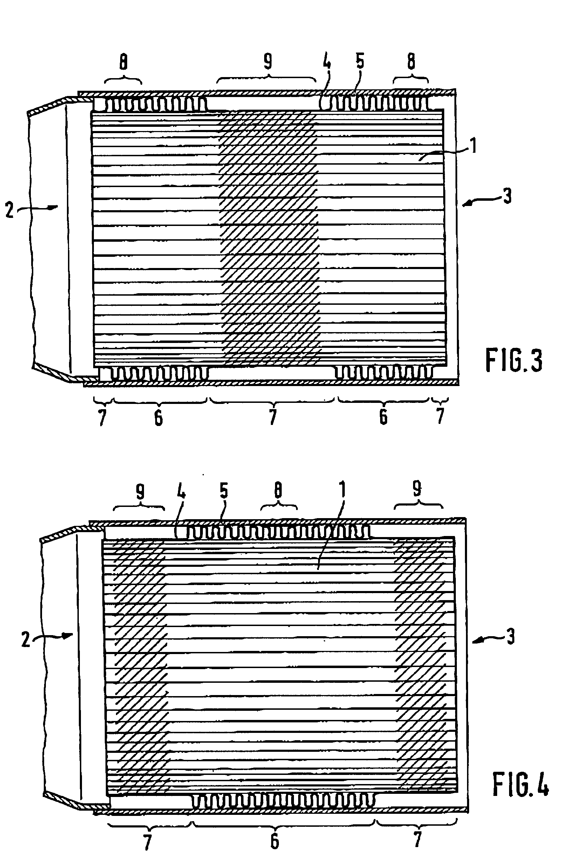

Fig. 3 zeigt, teilweise im Schnitt, ein drittes Ausführungsbeispiel einer Wabenkörperanordnung mit einem Wabenkörper 1. An der Fluideintrittsseite 2 ist zuerst ein glatter Teilbereich 7 angeordnet, dem ein gewellter Teilbereich 6, ein zweiter glatter Teilbereich 7, ein zweiter gewellter Teilbereich 6 und schließlich ein dritter glatter Teilbereich 6 folgen. Die fluideintritts- und fluidaustrittsseitgen glatten Teilbereiche 7 weisen jeweils eine Länge von etwa 5 mm auf und sind damit deutlich kürzer als der mittlere, axial-zentral angeordnete glatte Teilbereich 7. Der Wabenkörper 1 ist axial-partiell 9 über ein Länge von 25 mm mit dem langen, axial-zentral angeordneten gatten Teilbereich 7 verlötet; die fluideintritts- und fluidaustrittsseitig angeordneten gewellten Teilbereiche 6 sind axial-partiell 8 jeweils über eine Länge von z. B. drei Schlauchwellungen mit dem äußeren Mantelrohr 5 verlötet. Eine solche Wabenkörperanordnung mit zweien, fluideintrittsseitig 2 und fluidaustrittsseitig 3, angeordneten gewellten Teilbereichen 6 gleichen besonders gut mechanische Belastungen aus, insbesondere für Wabenkörper 1 mit einer höheren Baulänge von mehr als 150 mm.

Fig. 4 zeigt, teilweise im Längsaxialschnitt, ein viertes Ausführungsbeispiel einer Wabenkörperanordnung mit einem zylindrischen Wabenkörper 1. An der Fluideintrittsseite 2 ist zuerst ein glatter Teilbereich 7 angeordnet, dem ein gewellter Teilbereich 6 und ein weiterer glatter Teilbereich 7 folgen. Die fluideintritts- und fluidaustrittsseitgen glatten Teilbereiche 7 sind deutlich länger als die entsprechenden glatten Teilbereiche 7 nach Fig. 3. Der Wabenkörper 1 ist fluideintritts- und fluidaustrittsseitig axial-partiell 9 jeweils über eine Länge von z. B. 15 mm mit den gatten Teilbereichen 7 verlötet; der axial-zentral angeordnete gewellte Teilbereich 6 ist axial-partiell 8 über eine Länge von z. B. drei Schlauchwellungen mit dem äußeren Mantelrohr 5 verlötet. Eine solche Wabenkörperanordnung mit einem Wabenkörper 1 auch höherer Baulänge von über 150 mm gleicht einerseits aufgrund des axial-zentral angeordneten gewellten Teilbereichs 6 besonders gut mechanische Belastungen aus und unterstützt andererseits aufgrund des fluideintrittsseitigen längeren ersten, thermisch isolierten, glatten Teilbereichs 7 ein alsbaldiges Wiederstarten des Katalysator-Trägerkörpers.

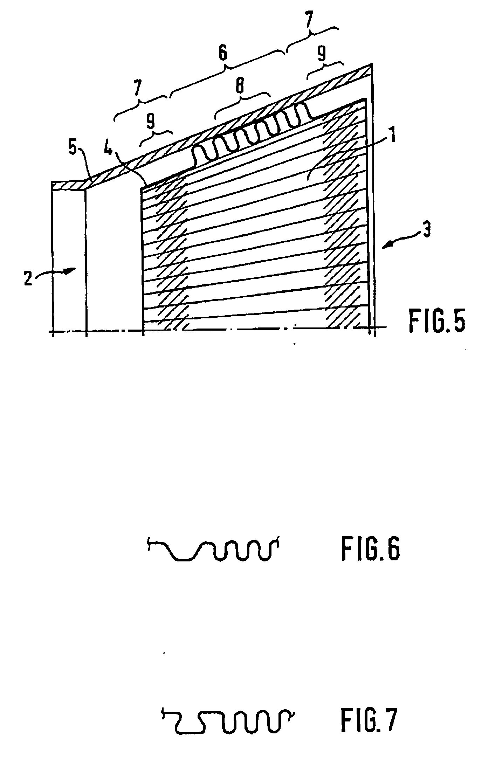

Fig. 5 zeigt, teilweise im Schnitt, ein Ausführungsbeispiel einer Wabenkörperanordnung wie in Fig. 4, jedoch fiir einen konischen Wabenkörper. Die zusätzliche Verwendung von konischen Wabenkörpem 1 ermöglicht unter Beibehaltung der aufgezeigten Vorzüge der Erfindung den Bau verhältnismäßig kompakter Abgasreinigungsanlagen mit sehr guten Strömungsverteilungen und besonders gutem Kaltstartverhalten.

Bei bevorzugten Ausführungsformen der Erfindung weisen die Schlauchwellungen der gewellten Teilbereiche 6 über ihren Längsaxialschnitt betrachtet Flankenbereiche großer Steilheit, insbesondere sogar eine Omegaform, auf. Figuren 6 und 7 zeigen ausschnittsweise hierzu alternative Schlauchwellungen mit abgeflachten, insbesondere trapezoidförmigen, Flankenbereichen, welche im axial-partiellen 8 Bereich der Verlötung mit dem äußeren Mantelrohr 5 den Vorteil einer dauerhafteren fügetechnischen Verbindung als bei omegaförmigen Schlauchwellungen aufweisen.

Die vorliegende Erfindung ermöglicht die fertigungstechnisch sichere Herstellung von Wabenkörperanordnungen, die besonders hohen Belastungen standhalten können und ein gutes Kaltstartverhalten im Abgasreinigungssystem eines Kraftfahrzeuges zeigen.

### Bezugszeichenliste

- 1: Wabenkörper
- 2: Fluideintrittsseite
- 3: Fluidaustrittsseite
- 4: inneres Mantelrohr
- 5: äußeres Mantelrohr
- 6: gewellter Teilbereich
- 7: glatter Teilbereich
- 8: axial-partieller Verbindungsbereich, zwischen gewelltem Teilbereich 6 und äußerem Mantelrohr 5 angeordnet
- 9: axial-partieller Verbindungsbereich, zwischen glattem Teilbereich 7 und Wabenkörper 1 angeordnet

## Patentansprüche

1. Wabenkörperanordnung umfassend einen Wabenkörper (1) mit einer Fluideintrittsseite (2) und einer Fluidaustrittsseite (3), insbesondere Katalysator-Trägerkörper für Kraftfahrzeuge, aus zumindest teilweise strukturierten Blechlagen, die nach ihrer Schichtung und/oder Wicklung für ein Fluid durchströmbare Kanäle bilden, wobei der Wabenkörper (1) von einem inneren Mantelrohr (4) und einem konzentrisch dazu angeordneten äußeren Mantelrohr (5) umgeben ist und wobei das innere Mantelrohr (4) zumindest in einem axialen Teilbereich (6) als Wellschlauch mit Schlauchwellungen ausgebildet ist, wobei
das innere Mantelrohr (4) mindestens einen weiteren axialen Teilbereich (7) aufweist, welcher glatt am Wabenkörper (1) anliegt, und der glatte Teilbereich (7) und der Wabenkörper (1) zumindest axialpartiell (9) fügetechnisch miteinander verbunden sind,
**dadurch gekennzeichnet, daß**
mehrere nebeneinander angeordnete Schlauchwellungen
des gewellten Teilbereichs (6) und das äußere Mantelrohr (5) axialpartiell (8) fügetechnisch miteinander verbunden sind, wobei jeder für eine fügetechnische Verbindung mit dem äußeren Mantelrohr (5) vorgesehene gewellte Teilbereich (6) in seiner partiellen (8) Länge so bemessen ist, daß bekannte Verbindungsmethoden, insbesondere Löt- und/oder Schweißverfahren, anwendbar sind.

2. Wabenkörperanordnung nach Anspruch 1, dadurch gekennzeichent, daß an der Fluideintrittsseite (2) zuerst ein glatter Teilbereich (7) angeordnet ist, dem mindestens ein gewellter Teilbereich (6) und mindestens ein weiterer glatter Teilbereich (7) folgen, so daß insgesamt n gewellte Teilbereiche (6) und n+1 glatte Teilbereiche (7) angeordnet sind, wobei n ganzzahlig und größer oder gleich 1 ist.

3. Wabenkörperanordnung nach Anspruch 1 oder 2, **dadurch gekennzeichnet, daß** für n = 1 der eine gewellte Teilbereich (6) überwiegend fluideintrittsseitig (2) angeordnet ist.

4. Wabenkörperanordnung nach Anspruch 1 oder 2, **dadurch gekennzeichnet, daß** für n = 1 der eine gewellte Teilbereich (6) axial-zentral angeordnet ist.

5. Wabenkörperanordnung nach Anspruch 1 oder 2, **dadurch gekennzeichnet, daß** für n = 1 der eine gewellte Teilbereich (6) überwiegend fluidaustrittsseitig (3) angeordnet ist.

6. Wabenkörperanordnung nach Anspruch 1 oder 2, **dadurch gekennzeichnet, daß** für n = 2 ein gewellter Teilbereich (6) fluideintrittsseitig (2) und der andere gewellte Teilbereich (6) fluidaustrittsseitig (3) angeordnet sind.

7. Wabenkörperanordnung nach Anspruch 1 oder 2, **dadurch gekennzeichnet, daß** für n = 3 der erste gewellte Teilbereich (6) fluideintrittsseitig (2), der zweite gewellte Teilbereich (6) axial-zentral und der dritte gewellte Teilbereich (6) fluidaustrittsseitig (3) angeordnet sind.

8. Wabenkörperanordnung nach einem der vorherigen Ansprüche, **dadurch gekennzeichnet, daß** für n größer 3 die gewellten und glatten Teilbereiche (6, 7) analog der Ansprüche 1 bis 7 angeordnet sind.

9. Wabenkörperanordnung nach einem der Ansprüche 1 bis 8, **dadurch gekennzeichnet, daß** bei axial-zentraler Anordnung eines gewellten Teilbereichs (6) nur dieser gewellte Teilbereich (6) mit dem äußeren Mantelrohr (5) axial-partiell (8) fügetechnisch verbunden ist.

10. Wabenkörperanordnung nach Anspruch 9, **dadurch gekennzeichnet, daß** bei axial-zentraler Anordnung eines gewellten Teilbereichs (6) die jeweils benachbart angeordneten glatten Teilbereiche (7) oder die jeweils fluideintrittsseitig (2) und fluidaustrittsseitig (3) angeordneten glatten Teilbereiche (7) mit dem Wabenkörper (1) zumindest axial-partiell (9) fügetechnisch verbunden sind.

11. Wabenkörperanordnung nach einem der Ansprüche 1 bis 8, **dadurch gekennzeichnet, daß** bei überwiegend oder ausschließlich axial-dezentraler Anordnung des/der gewellten Teilbereiche/s (6) diese/r nur fluideintrittsseitig (2) und/oder fluidaustrittsseitig (3) mit dem äußeren Mantelrohr (5) axial-partiell (8) fügetechnisch verbunden ist/sind.

12. Wabenkörperanordnung nach Anspruch 11, **dadurch gekennzeichnet, daß** bei überwiegend oder ausschließlich axial-dezentraler Anordnung des/der gewellten Teilbereiche/s (6) der axial-zentral, fluideintrittsseitig (2) oder fluidaustrittsseitig (3) angeordnete glatte Teilbereiche (7) mit dem Wabenkörper (1) zumindest axial-partiell (9) fugetechnisch verbunden ist/sind.

13. Wabenkörperanordnung nach einem der vorherigen Ansprüche, **dadurch gekennzeichnet, daß** die Summe der Axiallängen der gewellten Teilbereiche (6) mehr als die Hälfte, vorzugsweise über mehr als zwei Drittel, der Gesamtlänge (L) des Wabenkörpers (1) beträgt.

14. Wabenkörperanordnung nach einem der vorherigen Ansprüche, **dadurch gekennzeichnet, daß** die Schlauchwellungen des/der gewellten Teilbereiche (6) über ihren Axialschnitt betrachtet Flankenbereiche großer Steilheit, insbesondere sogar eine Omegaform, aufweisen.

15. Wabenkörperanordnung nach einem der vorherigen Ansprüche, **dadurch gekennzeichnet, daß** die Schlauchwellungen unabhängig von ihrer übrigen Form im Bereich (8) ihrer fügetechnischen Verbindung mit dem äußeren Mantelrohr (5) abgeflacht ausgebildet sind.

16. Wabenkörperanordnung nach einem der vorherigen Ansprüche, **dadurch gekennzeichnet, daß** die partielle (8) fügerechnische Verbindung zwischen dem gewellten Teilbereich (6) und dem äußeren Mantelrohr (5) sich jeweils über 1 bis 5, vorzugsweise über 2 bis 4, insbesondere über 3 Schlauchwellungen, des gewellten Teilbereichs (6) erstrecken.

17. Wabenkörperanordnung nach einem der vorherigen Ansprüchem **dadurch gekennzeichnet, daß** das Verhälmis fügetechnisch verbundener Sxhlauchwellungen zu nicht fügetechnisch verbundenen Schlauchwellungen höchstens 1 : 1,5 berärgt, vorzugweise 1 : 4.

18. Wabenkörperanordnung nach einem der vorherigen Ansprüche **dadurch gekennzeichnet, daß** jeder eine fügetechnische Verbindung mit dem Wabenkörper (1) vorgesehene glatte Teilbereich (7) in seiner partiellen (9) Länge so besemessen ist, daß bekannte Verbindungsmethoden, insbesondere Löt - und/oder Schweißverfahren, anwendbar sind.

19. Wabenkörperanordnung nach Ansprüch 18, **dadurch gekennzeichnet, daß** jeder für eine fügetechnische Verbindung mit dem Wabenkörper (1) vorgesehene glatte Teilbereich (7) wenigstens 15 mm lang ist, vorzugsweise wenigstens 20 mm, insbesondere etwa 25 mm.

20. Wabenkörperanordnung nach einem der vorherigen Ansprüche, **dadurch gekennzeichnet, daß** der an der Fluideintrittsseite (2) angeordnete erste glatte Teilbereich (7) wenigstens 5 mm lang ist, vorzugsweise wenigstens 7,5 mm, insbesondere etwa 10 mm.

21. Wabenkörperanordnung nach einem der vorherigen Ansprüche, **dadurch gekennzeichnet, daß** der Wabenkörper ein axial-durchströmbarer Katalysator-Trägerkörper ist, welcher eine geometrische, vorzugsweise eine zylindrische oder konische, Form aufweist.

## Claims

1. A honeycomb body arrangement including a honeycomb body (1) comprising a fluid intake end (2) and a fluid outlet end (3), in particular a catalyst carrier body for motor vehicles, comprising at least partially structured sheet metal layers which after layering and/or winding thereof form passages through which a fluid can flow, wherein the honeycomb body (1) is surrounded by an inner tubular casing (4) and an outer tubular casing (5) arranged concentrically with respect thereto and wherein the inner tubular casing (4) is in the form of a corrugated tube with tube corrugations at least in an axial portion (6), wherein the inner tubular casing (4) has at least one further axial portion (7) which bears smoothly against the honeycomb body (1) and the smooth portion (7) and the honeycomb body (1) are connected together in at least axially partial fashion (9) by intimate joining of the materials, **characterised in that** a plurality of tube corrugations which are arranged in mutually juxtaposed relationship of the corrugated portion (6) and the outer tubular casing (5) are connected together in axially partial fashion (8) by intimate joining of the materials, wherein each corrugated portion (6) provided for connection by intimate joining of the materials involved to the outer tubular casing (5) is of such a dimension in respect of its partial (8) length that known connecting methods, in particular brazing and/or welding methods, can be applied.

2. A honeycomb body arrangement according to claim 1 **characterised in that** arranged firstly at the fluid intake end (2) is a smooth portion (7) which is followed by at least one corrugated portion (6) and at least one further smooth portion (7) so that there are a total of n corrugated portions (6) and n+1 smooth portions (7), wherein n is a whole number and is greater than or equal to 1.

3. A honeycomb body arrangement according to claim 1 or claim 2 **characterised in that** for n = 1 the one corrugated portion (6) is arranged predominantly at the fluid intake end (2).

4. A honeycomb body arrangement according to claim 1 or claim 2 **characterised in that** for n = 1 the one corrugated portion (6) is arranged in axially central relationship.

5. A honeycomb body arrangement according to claim 1 or claim 2 **characterised in that** for n = 1 the one corrugated portion (6) is arranged predominantly at the fluid outlet end (3).

6. A honeycomb body arrangement according to claim 1 or claim 2 **characterised in that** for n = 2 a corrugated portion (6) is arranged at the fluid intake end (2) and the other corrugated portion (6) is arranged at the fluid outlet end (3).

7. A honeycomb body arrangement according to claim 1 or claim 2 **characterised in that** for n= 3 the first corrugated portion (6) is arranged at the fluid intake end (2), the second corrugated portion (6) is arranged in axially central relationship and the third corrugated portion (6) is arranged at the fluid outlet end (3).

8. A honeycomb body arrangement according to one of the preceding claims **characterised in that** for n greater than 3 the corrugated and smooth portions (6, 7) are arranged similarly to claims 1 to 7.

9. A honeycomb body arrangement according to one of claims 1 to 8 **characterised in that** with an axially central arrangement of a corrugated portion (6) only that corrugated portion (6) is axially partially (8) connected to the outer tubular casing (5) by intimate joining of the materials involved.

10. A honeycomb body arrangement according to claim 9 **characterised in that** with an axially central arrangement of a corrugated portion (6) the respectively adjacently arranged smooth portions (7) or the respective smooth portions (7) arranged at the fluid intake end (2) and the fluid outlet end (3) are at least axially partially (9) connected to the honeycomb body (1) by intimate joining of the materials involved.

11. A honeycomb body arrangement according to one of claims 1 to 8 **characterised in that** with a predominantly or exclusively axially decentral arrangement of the corrugated portion or portions (6) same is or are axially partially (8) connected by intimate joining of the materials to the outer tubular casing (5) only at the fluid intake end (2) and/or the fluid outlet end (3).

12. A honeycomb body arrangement according to claim 11 **characterised in that** with a predominantly or exclusively axially decentral arrangement of the corrugated portion or portions (6) the smooth portion (7) arranged in axially central relationship at the fluid intake end (2) or the fluid outlet end (3) is or are at least axially partially (9) connected to the honeycomb body (1) by intimate joining of the materials involved.

13. A honeycomb body arrangement according to one of the preceding claims **characterised in that** the sum of the axial lengths of the corrugated portions (6) is more than half and preferably over more than two thirds of the total length (L) of the honeycomb body (1).

14. A honeycomb body arrangement according to one of the preceding claims **characterised in that** the tube corrugations of the corrugated portion or portions (6) as viewed over their axial section have flank regions of steeper gradient and in particular are even of an omega shape.

15. A honeycomb body arrangement according to one of the preceding claims **characterised in that** the hose corrugations are of a flattened configuration irrespective of the rest of their shape in the region (8) of their connection to the outer tubular casing (5) by intimate joining of the materials involved.

16. A honeycomb body arrangement according to one of the preceding claims **characterised in that** the partial (8) connection between the corrugated portion (6) and the outer tubular casing (5) by intimate joining of the materials involved each respectively extend over 1 to 5 and preferably over 2 to 4 and in particular over 3 tube corrugations of the corrugated portion (6).

17. A honeycomb body arrangement according to one of the preceding claims **characterised in that** the ratio of tube corrugations which are connected by intimate joining of the materials involved to tube corrugations which are not connected by intimate joining of the materials is at most 1:1.5, preferably 1:4.

18. A honeycomb body arrangement according to one of the preceding claims **characterised in that** each smooth portion (7) provided for connection by intimate joining of the materials involved to the honeycomb body (1) is of such a dimension in respect of its partial (9) length that known connecting methods, in particular brazing and/or welding methods, can be applied.

19. A honeycomb body arrangement according to claim 18 **characterised in that** each smooth portion (7) provided for connection to the honeycomb body (1) by intimate joining is at least 15 mm in length, preferably at least 20 mm, in particular about 25 mm.

20. A honeycomb body arrangement according to one of the preceding claims **characterised in that** the first smooth portion (7) arranged at the fluid intake end (2) is at least 5 mm long, preferably at least 7.5 mm, in particular about 10 mm.

21. A honeycomb body arrangement according to one of the preceding claims **characterised in that** the honeycomb body is a catalyst carrier body through which fluid can flow axially and which is of a geometrical, preferably cylindrical or conical, shape.

## Revendications

1. Dispositif à corps alvéolaire comportant un corps alvéolaire (1) avec un coté entrée de fluide (2) et un coté sortie de fluide (3), notamment corps support de catalyseur pour véhicules automobiles, de couches de tôles au moins partiellement structurées, qui après leur empilage et/ou enroulement forment des canaux pouvant être traversés par un fluide, le corps alvéolaire (1) étant entouré d'un tube d'enveloppe intérieur (4) et d'un tube d'enveloppe extérieur (5), agencé de manière concentrique par rapport à celui-ci, et le tube d'enveloppe intérieur (4) étant réalisé en tant que tuyau onduleux avec des ondulations de tuyau dans au moins une zone partielle (6) axiale, le tube d'enveloppe intérieur (4) présentant au moins une zone partielle axiale additionnelle (7), qui s'applique de façon lisse contre le corps alvéolaire (1) et la zone partielle lisse (7) et le corps alvéolaire (1) étant reliés au moins de façon axiale-partielle (9) par technique de jointoiement, **caractérisé en ce que** plusieurs ondulations de tuyau agencées les unes à coté des autres de la zone partielle ondulée (6) et le tube d'enveloppe extérieur (5) sont reliés de façon axiale-partielle (8) par technique de jointoiement, chaque zone partielle ondulée (6) prévue pour une liaison par technique de jointoiement avec le tube d'enveloppe extérieur (5) étant dimensionnée dans sa longueur partielle (8) de telle manière que des techniques de liaison connues, notamment des procédés de brasage et/ou de soudage, sont applicables.

2. Dispositif à corps alvéolaire selon la revendication 1, **caractérisé en ce qu'**une zone partielle lisse (7) est d'abord agencée au niveau du coté entrée de fluide (2), la zone partielle lisse (7) étant suivie par au moins une zone partielle ondulée (6) et au moins par une zone partielle lisse additionnelle (7) de manière à ce qu'en tout n zones partielles ondulées (6) et n+1 zones partielles lisses (7) sont agencées, n étant un nombre entier et plus grand que ou égal à 1.

3. Dispositif à corps alvéolaire selon la revendication 1 ou 2, **caractérisé en ce que** pour n = 1 la zone partielle ondulée (6) est principalement agencée du coté entrée de fluide (2).

4. Dispositif à corps alvéolaire selon la revendication 1 ou 2, **caractérisé en ce que** pour n = 1 la zone partielle ondulée (6) est agencée de manière axiale-centrale.

5. Dispositif à corps alvéolaire selon la revendication 1 ou 2, **caractérisé en ce que** pour n = 1 la zone partielle ondulée (6) est principalement agencée du coté sortie de fluide (3).

6. Dispositif à corps alvéolaire selon la revendication 1 ou 2, **caractérisé en ce que** pour n = 2 une zone partielle ondulée (6) est agencée du coté entrée de fluide (2), et l'autre zone partielle ondulée (6) est agencée du coté sortie de fluide (3).

7. Dispositif à corps alvéolaire selon la revendication 1 ou 2, **caractérisé en ce que** pour n = 3 la première zone partielle ondulée (6) est agencée du coté entrée de fluide (2), la deuxième zone partielle ondulée (6) de manière axiale-centrale et la troisième zone partielle ondulée du coté sortie de fluide (3).

8. Dispositif à corps alvéolaire selon l'une des revendications précédentes, **caractérisé en ce que** pour n plus grand que 3 les zones partielles ondulées et lisses (6, 7) sont agencées de manière analogue aux revendications 1 à 7.

9. Dispositif à corps alvéolaire selon l'une des revendications 1 à 8, **caractérisé en ce que** dans le cas d'un agencement axial-central d'une zone partielle ondulée (6) uniquement cette zone partielle ondulée (6) est reliée de manière axiale-partielle (8) par technique de jointoiement au tube d'enveloppe extérieur (5).

10. Dispositif à corps alvéolaire selon la revendication 9, **caractérisé en ce que** dans le cas d'un agencement axial-central d'une zone partielle ondulée (6) les zones partielles lisses (7) agencées respectivement de manière adjacente ou les zones partielles lisses (7) étant agencées respectivement du coté entrée de fluide (2) et du coté sortie de fluide (3) sont reliées au moins axialement-partiellement (9) par technique de jointoiement au corps alvéolaire (1).

11. Dispositif à corps alvéolaire selon l'une des revendications 1 à 8, **caractérisé en ce que** dans le cas d'un agencement de la/des zone(s) partielle(s) ondulée(s), qui est principalement ou uniquement axial-décentralisé, celle-ci/ceux-ci est/sont uniquement reliée(s) axialement-partiellement (8) au tube d'enveloppe extérieur (5) du coté entrée de fluide (2) et/ou du coté sortie de fluide (3) par technique de jointoiement.

12. Dispositif à corps alvéolaire selon la revendication 11, **caractérisé en ce que** dans le cas d'un agencement principalement ou uniquement axial-décentralisé de la/des zone(s) partielle(s) ondulée(s) (6) la/les zone (s) partielle(s) lisse(s) (7), agencée(s) de façon axiale-centralisée, du coté entrée de fluide (2) ou du coté sortie de fluide (3) est/sont reliée(s) au moins de façon axiale-partielle (9) par technique de jointoiement au corps alvéolaire (1).

13. Dispositif à corps alvéolaire selon. l'une des revendications précédentes, **caractérisé en ce que** la somme des longueurs axiales des zones partielles ondulées (6) comporte plus que la moitié, de préférence plus que deux tiers de la longueur totale (L) du corps alvéolaire (1).

14. Dispositif à corps alvéolaire selon l'une des revendications précédentes, **caractérisé en ce que** les ondulations de tuyau de la/des zone(s) partielle(s) ondulée(s) (6), vue(s) sur sa/leur coupe axiale, présentent des zones de flancs à grande pente, notamment même une forme oméga.

15. Dispositif à corps alvéolaire selon l'une des revendications précédentes, **caractérisé en ce qu'**indépendamment du reste de leur forme les ondulations de tuyau sont réalisées de façon aplatie avec le tube enveloppe extérieur (5) dans la zone (8) de leur liaison par jointoiement.

16. Dispositif à corps alvéolaire selon l'une des revendications précédentes, **caractérisé en ce que** la liaison partielle (8) par technique de jointoiement entre la zone partielle ondulée (6) et le tube d'enveloppe extérieur (5) s'étend respectivement sur 1 à 5, de préférence sur 2 à 4, notamment sur 3 ondulations de tuyau de la zone partielle ondulée (6).

17. Dispositif à corps alvéolaire selon l'une des revendications précédentes, **caractérisé en ce que** le rapport entre les ondulations de tuyau reliées par technique de jointoiement et les ondulations de tuyaux qui ne sont pas reliées par technique de jointoiement comporte au maximum 1:1,5, de préférence 1 :4.

18. Dispositif à corps alvéolaire selon l'une des revendications précédentes, **caractérisé en ce que** chaque zone partielle lisse (7) prévue pour une liaison par technique de jointoiement avec le corps alvéolaire (1) est dimensionnée de telle manière dans sa longueur partielle (9) que des méthodes de liaison connues, notamment des procédés de brasage et/ou de soudage, sont applicables.

19. Dispositif à corps alvéolaire selon la revendication 18, **caractérisé en ce que** chaque zone partielle lisse (7) prévue pour une liaison par technique de jointoiement avec le corps alvéolaire (1) a une longueur d'au moins 15 mm, de préférence d'au moins 20 mm, notamment d'environ 25 mm.

20. Dispositif à corps alvéolaire selon l'une des revendications précédentes, **caractérisé en ce que** la première zone partielle lisse (7) agencée du coté entrée de fluide (2) a une longueur d'au moins 5 mm, de préférence d'au moins 7,5 mm, notamment d'environ 10 mm.

21. Dispositif à corps alvéolaire selon l'une des revendications précédentes, **caractérisé en ce que** le corps alvéolaire est un corps support de catalyseur pouvant être traversé de façon axiale qui a une forme géométrique, de préférence cylindrique ou conique.
